Europäisches Patentamt

European Patent Office

Office européen des brevets

(19)

(11) Publication number : **0 425 155 B1**

(12) **EUROPEAN PATENT SPECIFICATION**

(45) Date of publication of patent specification :
15.12.93 Bulletin 93/50

(51) Int. Cl.⁵ : **B60C 9/20**

(21) Application number : **90311281.1**

(22) Date of filing : **16.10.90**

(54) **Radial tyre.**

(30) Priority : **21.10.89 JP 274744/89**

(43) Date of publication of application :
02.05.91 Bulletin 91/18

(45) Publication of the grant of the patent :
15.12.93 Bulletin 93/50

(84) Designated Contracting States :
**DE FR GB**

(56) References cited :
**EP-A- 0 376 272**
**GB-A- 1 264 118**
**US-A- 3 756 883**
**RESEARCH DISCLOSURE. no. 159, July 1977,**
**HAVANT GB pages 53 - 54;**
**anonym:"Reinforcing cords for elastomeric**
**articles"**

(73) Proprietor : **SUMITOMO RUBBER INDUSTRIES
LIMITED
1-1 Tsutsuicho 1-chome Chuo-ku
Kobe-shi Hyogo-ken (JP)**

(72) Inventor : **Kadomaru, Kazuo
2-9, Tsukushigaoka 5-chome, Kita-ku
Kobe-shi, Hyogo-ken (JP)**

(74) Representative : **Stewart, Charles Geoffrey
SP TYRES UK LIMITED Tyre Technical
Division
Fort Dunlop, Erdington, Birmingham B24 9QT
(GB)**

EP 0 425 155 B1

Jouve, 18, rue Saint-Denis, 75001 PARIS

## Description

The present invention relates to a radial tyre having a belt reinforcing the tread region.

The performance factors of a belted radial tyre, for example steering stability, wear resistance, high speed durability, resistance to belt ply edge looseness, and the like are influenced by the elastic properties of the belt cord, especially the elongation at a given cord load and the modulus of elasticity. Therefore, it is a point of tyre design to select proper cords for the belt. Heretofore, a cord made of a single material such as nylon fibre aromatic polyamide fibres, steel filaments and the like has been employed as a belt cord.

When such a conventional single material cord is used, however, it is difficult to improve the tyre performance factors all round because the elastic property of the cord is limited to a narrow range depending on the material used and as a result the design freedom is also limited in a narrow range.

When organic fibre cords having a relatively lower modulus and accordingly having a higher percentage of elongation such as nylon fibre cords are used the stress concentration in the belt ply edges due to the repeated deformation during running can be mitigated by the elongation of the cord, and thereby, and also due to such cords having good adhesiveness to rubber, the above mentioned resistance to belt edge looseness is provided. However due to the higher elongation, the belt is inferior in hoop effect, and as a result steering stability, wear resistance, and high speed durability are deteriorated.

When organic fibre cords having relatively higher modulus and accordingly having a lower elongation percentage such as aromatic polyamide cords are used, the belt is superior in hoop effect and thus steering stability, wear resistance, and high speed durability are improved. However, belt edge looseness is liable to occur since stress concentration can not be mitigated due to the lower elongation and inferior adhesiveness of the cords.

Further, when steel cords having an extremely high modulus are used, the occurrence of belt edge looseness is further increased, and steering stability, ride comfort and high speed durability are liable to be impaired by excessively increased tread rigidity. Further, the uniformity in tyre profile is apt to be disturbed.

A known tyre according to the preamble of claim 1 is shown, e.g. in US-A-3756883

It is, therefore, an object of the present invention to provide a radial tyre which is improved all round in various performance factors such as the resistance to belt edge looseness, steering stability, wear resistance, high speed durability and the like.

Accordingly to one aspect of the present invention, a radial tyre comprises a carcass having cords arranged at an angle of 75 to 90 degrees with respect to the tyre equator, and a belt disposed radially outside the carcass and comprising plural plies of parallel cords laid an an inclination angle of not more than 35 degrees to the tyre equator, wherein each belt cord is composed of at least one steel strand and at least one organic strand which are twisted together so as to provide the cord with the following elastic characteristics the elongation of the cord when loaded by 5kg load is not less than 2% and the elongation of the cord when loaded by 20 kg is not more than 4%.

As the belt cord is provided with a specification linear property which presents a lower elastic modulus at a light load range and a higher elastic modulus at a heavier load range, stress concentration on the ply edges can be mitigated by the increased cord elongation in the middle load range. The adhesiveness of the cord is improved by the presence of the low modulus organic strand which is superior in adhesiveness. Therefore, belt edge looseness can be effectively prevented.

In a service condition when the tyre is inflated, the belt cord presents a high elastic modulus, and as a result, the steering stability, wear resistance and high speed durability can be maintained at the same good level as that by the high modulus single material cords.

Thus, it becomes possible to improve tyre performance all round, which can not be achieved by single material cords.

An embodiment of the present invention will now be described in detail with reference to the accompanying drawings, in which:

Fig.1. is a sectional view showing an embodiment of the present invention;

Fig.2. is a sectional view showing an example of the belt cord structure, and

Fig.3. is a diagram showing characteristics of belt cords.

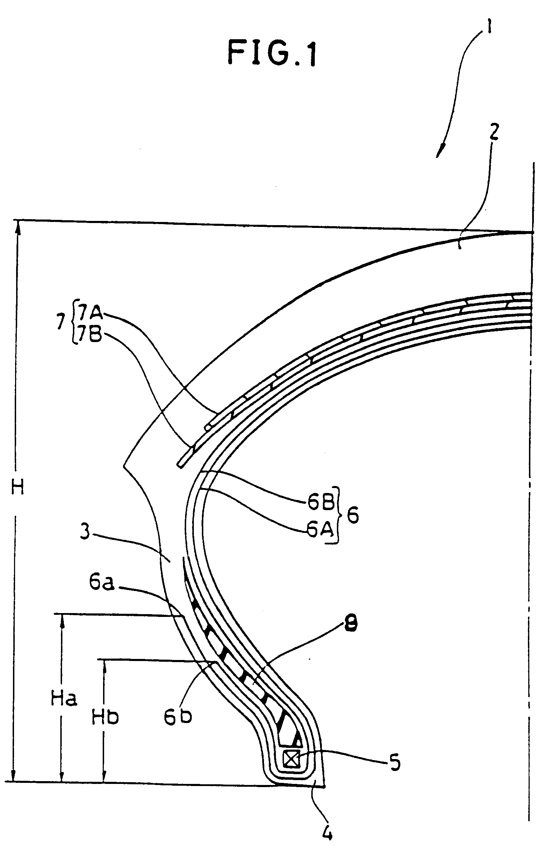

In Fig.1, tyre 1 according to the present invention is a radial tyre for motorcycles.

The tyre 1 has a pair of bead portions 4, sidewall portions 3 extending radially outwardly from each bead portion 4, and a rubber tread portion 2 extending between the radially outer edges of the sidewall portions 3.

The tyre comprises a pair of bead cores 5 disposed one in each bead portion 4, a carcass 6 having at least one ply of cords extending between the bead portions 4 and turned up around the bead cores 5, and a belt layer 7 disposed between the carcass and its tread 2.

The tread 2 is disposed on the carcass crown and extends from the centre of the crown towards both sides thereof substantially parallel to the carcass profile, and the axial width of the tread 2 between the tread edges is larger than the maximum tyre section width in the sidewall portions so as to provide camber thrust during cornering.

The carcass 6 has at least one ply of cords arranged at 75 to 90 degrees with respect to the tyre equator. In this embodiment, the carcass is composed of two plies 6A, 6B of cords turned up around the bead cores 5 from the axially inside to the outside thereof, and the both edges are terminated in the respective sidewall portions 3.

However, the carcass may be composed of a ply or plies turned up from the axially outside to the inside or a combination of a ply or plies turned up from the axially inside to the outside and a ply or plies turned up from the axially outside to the inside.

The axially outer carcass ply turned up portion 6a is extending radially outwardly over the radially outer edge of the axially inner carcass ply turned up portion 6b so as to cover this edge and to, thereby, mitigate stress concentration at the edge.

To increase the lateral stiffness of the tyre the height Ha of the edge of the carcass ply turned up portion 6a and the height Hb of the edge of the carcass ply turned up portion 6b are respectively set in the range of 20 to 40% and in the range of 15 to 30% respectively of the tyre section height H, all measured from the bead base. Also a apex 8 made of hard rubber extending tapering from the bead core 5 towards the sidewall portion 3 is disposed between the carcass main portion 6 and the turned up portions 6a, 6b. The sidewall 3 is also made of hard rubber.

For the carcass cords, organic fibre cords, for example nylon, rayon, polyester or the like, having an initial modulus of elasticity of not more than 1500 kg/sq.mm can be used. More preferably, cords having an initial modulus of elasticity of not more than 400 kg/sq.mm, for example nylon fibre cords are used.

In this case, for example, 1000 to 200 denier nylon cords embedded in a rubber having a 300% modulus of 80 to 230 kg/sq.cm at a cord count of 35 to 60 cords/5cm are used.

The belt layer 7 is disposed radially outside the carcass 6 and comprises cords laid at 35 degrees or less with respect to the tyre equator. In this embodiment, the belt layer is composed of two plies 7a, 7b each of the so called cut edge type and extending across substantially whole width of the tread 2. The cords in each ply are arranged parallel to each other, but crosswise to those of the next ply.

The cord 9 used for the belt layer has the following elastic characteristics: the elongation of the cord when loaded with 5 kg is not less than 2% and the elongation of the cord when loaded with 20kg is not more than 4%.

To achieve such characteristics, a hybrid cord composed of at least one organic strand and at least one steel strand which are twisted together is used as the belt cord 9.

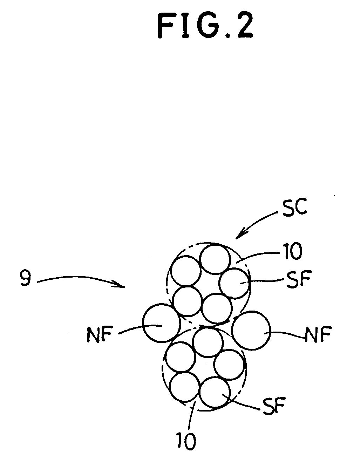

Fig.2 shows an example of such a belt cord structure, wherein the cord 9 is composed of two steel strands 10 and two organic strands.Each steel strand 10 is composed of five steel filaments SF twisted together and each organic strand is composed of only one nylon filament NF. The cord twist is in the range of 30 to 40 turns/10cm, and the strand twist is in the range of 20 to 40 turns/10cm.

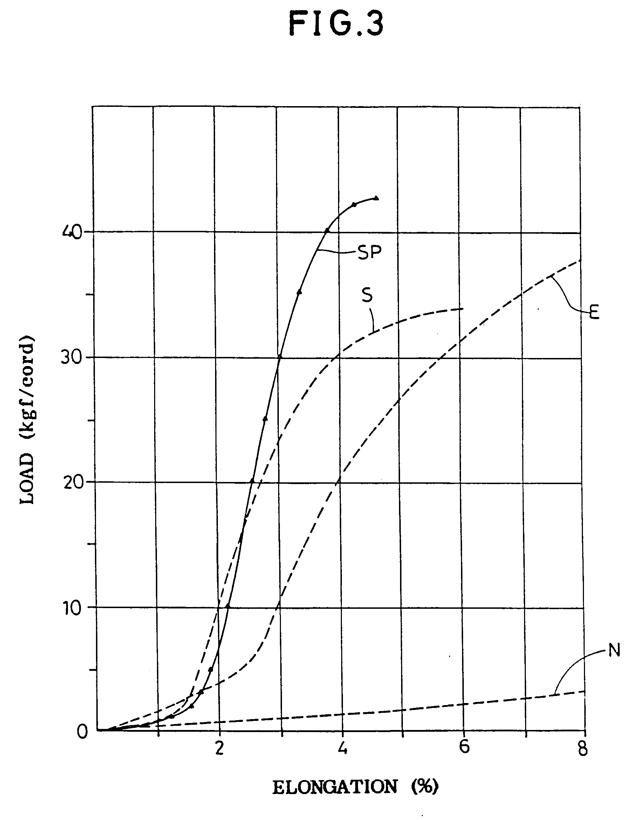

In Fig.3 the broken line E shows the load elongation curve of this cord 9, which shows that the cord 9 is low in elastic modulus at a light load but high at a heavy load. Incidentally, in Fig.3 the line N shows the load elongation curve of a nylon cord (840d/2), the line SP shows that of a spiral steel cord (1x4x0.22), and the line S shows that of a steel cord (3x3x0.15).

If the elongation at 5 kgf load is less than 2%, the effect to reduce the stress which is concentrated at the belt ply edges is not sufficient to prove the resistance to belt edge looseness.

When the elongation at 20 kgf load is more than 4% the hoop effect of the belt reduces to deteriorate steering stability, wear resistance and high speed durability.

The cords 9 are embedded in rubber having a 50% modulus of 10 to 40 kg/sq.cm to form the belt plies 7a and 7b.

Here, the cords 9 have to keep the above mentioned elastic characteristics after vulcanisation has been finished.

If there is a decrease in elongation percentage due to the vulcanisation,, it must be limited in the range of not less than 30% to obtain the above mentioned effects.

Since the load elongation curve or the elastic characteristics of a twisted cord are varied by various factors such as the number of strands, the number of filaments in each strand, the thickness of the strand, the thickness of the filament, the pitches of the cord twist, strand twist and filament twist, various ratios between the factors concerning the steel strand and those concerning the organic strand, and the like, the belt cord is by its elastic characteristics rather than its structure.

Since the belt cord 9 has a lower elastic modulus in a light load range and a higher elastic modulus in a heavy load range as explained above, belt edge looseness is effectively prevented while maintaining the steering stability, wear resistance, high speed durability, and the total tyre performance is thus improved.

Test tyres of size 150/60R18 having the structure shown in Fig.1. and specifications given in Table 1 were prepared and subjected to indoor tests according to JATMA'S automobile tyre safety standard (quality standard for motor-cycle tyres). In those comparison tests, the tyre was inspected for belt edge looseness after the tyre had run for 1000km, the increase in tyre outer diameter was measured, and further the high speed durability was evaluated. The test results are shown in Table 1, wherein the time and speed in the "High speed durability" section mean that a tread separation failure occurred after running for that time at that speed.

TABLE 1

|  | Ex.1 | Ex.2 | Ref.1 | Ref.2 | Ref.3 |
|---|---|---|---|---|---|
| CARCASS<br>Cord Angle<br>Cord material | 1 ply<br>90 deg.<br>1260d/2<br>nylon | 2 ply<br>88 deg.<br>1260d/2<br>nylon | 2 ply<br>88 deg.<br>1260d/2<br>nylon | 1 ply<br>90 deg.<br>1260d/2<br>nylon | 2 ply<br>90 deg.<br>1260d/2<br>nylon |
| BELT<br>Cord angle<br><br>Cord material<br><br><br>Steel strand<br>Organic strand<br><br>Cord elongation<br>@ 5 kgf/cord<br>@ 20 kgf/cord<br>@ 6.8kgf/cord | 2 plies<br>17 deg.<br><br>hybrid<br>steel &<br>nylon<br>2x5x0.15<br>2x0.25<br><br><br>2.5 %<br>4 % | 2 plies<br>35 deg.<br><br>hybrid<br>steel &<br>nylon<br>2x5x0.15<br>2x0.25<br><br><br>2.0 %<br>3.5 % | 2 plies<br>38 deg.<br><br>single<br>1500d/2<br>aramide<br><br><br><br><br><br>0.6 % | 2 plies<br>17 deg.<br><br>single<br>1260d/2<br>nylon<br><br><br><br><br><br>9.8 % | 2 plies<br>17 deg.<br><br>single<br>steel<br><br>3x3x0.15<br><br><br>1.8 %<br>2.8 % |
| Belt ply edge<br>looseness | non | non | occurred | non | occurred |
| Increase in tire<br>diameter | 3.2 % | 3.5 % | 3.0 % | 4.2 % | 3.1 % |
| High speed<br>durability | 2 min.<br>280 km/h | 10 min.<br>270 km/h | 5 min.<br>280 km/h | 8 min.<br>250 km/h | 2 min.<br>260 km/h |

As shown in table 1, the working example tyres 1 and 2 according to the present invention were improved in total tyre performance in comparison with the reference tyres.

Thus, in the present invention, since the belt layer is made if hybrid cords having a low elastic modulus at a light load range and a high elastic modulus at a heave load range, the tyre performance is improved all round.

**Claims**

1. A radial tyre comprising a carcass (6) having a ply of cords arranged at an angle of 75 to 90 degrees with respect to the tyre equator, and a belt (7) disposed radially outside the carcass (6) and comprising plural plies (7a, 7b) of parallel cords (9) laid at an inclination angle of not more than 35 degrees to the tyre equator whereby each belt cord (9) is composed of at least one steel strand (10) and at least one organic strand (NF) which are twisted together characterised in that the elongation of the cord (9) when loaded by 5kg load is not less than 2% and the elongation of the cord (9) when loaded by 20kg load is not more than 4%.

4

2. The radial tyre according to claim 1 characterised in that belt cords (9) are embedded in topping rubber having a 50% modulus of 10 to 40 Kgf/sq.cm.

3. The radial tyre according to claim 1 or 2 characterised in that the carcass cords (9) are made of organic fibres, and the initial modulus of elasticity of the carcass cord is not more than 1500 kgf/sq.mm.

4. The radial tyre according to claim 1 characterised in that the belt cord (9) is composed of plural steel strands each composed of twisted steel filaments and plural organic strands each composed of only one nylon filament.


**Patentansprüche**

1. Ein Radialreifen mit einer Karkasse (6) mit einer Lage von Corden, welche unter einem Winkel von 75 bis 90 Grad in bezug auf den Reifenäquator angeordnet sind, und einem Gürtel (7), welcher radial außerhalb der Karkasse (6) angeordnet ist und Mehrfachlagen (7a, 7b) paralleler Corde (9) umfaßt, welche unter einem Neigungswinkel von nicht mehr als 35 Grad zum Reifenäquator gelegt sind, wobei jeder Gürtelcord (9) aus wenigstens einem Stahlstrang (10) und wenigstens einem organischen Strang (NF) zusammengesetzt ist, welche zusammengedreht sind,
dadurch **gekennzeichnet**, daß
die Dehnung des Cords (9) nicht weniger als 2 % beträgt, wenn er durch eine 5kg-Belastung belastet wird, und die Dehnung des Cords (9) nicht mehr als 4 % beträgt, wenn er durch eine 20kg-Belastung belastet wird.

2. Der Radialreifen nach Anspruch 1,
dadurch **gekennzeichnet**, daß
Gürtelcorde (9) in Gummierungsmaterial aus Gummi mit einem 50 % Modul von 10 bis 40 Kgf/cm$^2$ eingebettet sind.

3. Der Radialreifen nach Anspruch 1 oder 2,
dadurch **gekennzeichnet**, daß
die Karkassencorde (9) aus organischen Fasern hergestellt sind, und der Anfangselastizitätsmodul des Karkassencords nicht mehr als 1500 kgf/mm$^2$ beträgt.

4. Der Radialreifen nach Anspruch 1,
dadurch **gekennzeichnet**, daß
der Gürtelcord (9) aus Mehrfachstahlsträngen zusammengesetzt ist, von denen jeder aus verdrehten Stahlfilamenten und organischen Mehrfachsträngen zusammengesetzt ist, von denen jeder aus nur einem Nylonfilament zusammengesetzt ist.


**Revendications**

1. Pneumatique à carcasse radiale, comprenant une carcasse (6) ayant une nappe de câblés faisant un angle de 75 à 90° avec l'équateur du pneumatique, et une ceinture (7) disposée radialement à l'extérieur de la carcasse (6) et comprenant plusieurs nappes (7a, 7b) de câblés parallèles (9) disposés avec un angle d'inclinaison qui ne dépasse pas 35° par rapport à l'équateur du pneumatique, chaque câblé de ceinture (9) étant composé d'au moins un brin d'acier (10) et d'au moins un brin organique (NF), les brins étant retordus ensemble, caractérisé en ce que l'allongement du câblé (9) sous une charge de 49 N (5 kg) n'est pas inférieur à 2 %, et l'allongement du câblé (9) sous une charge de 196 N (20 kg) ne dépasse pas 4 %.

2. Pneumatique à carcasse radiale selon la revendication 1, caractérisé en ce que les câblés de ceinture (9) sont enrobés dans un caoutchouc d'enrobage ayant un module à 50 % compris entre $1.10^6$ et $4.10^6$ Pa (10 à 40 kgf/cm$^2$).

3. Pneumatique à carcasse radiale selon la revendication 1 ou 2, caractérisé en ce que les câblés (9) de la carcasse sont formés de fibres organiques, et le module d'élasticité initial du câblé de carcasse ne dépasse pas $1,5.10^8$ Pa (1 500 kgf/cm$^2$).

4. Pneumatique à carcasse radiale selon la revendication 1, caractérisé en ce que le câblé (9) de ceinture est composé de plusieurs brins d'acier, composés chacun de filaments retordus d'acier, et de plusieurs brins organiques composés chacun d'un seul filament de "Nylon".

# FIG.1

# FIG.2

# FIG.3